# EUROPEAN PATENT APPLICATION

(11) **EP 4 407 716 A1**
(43) Date of publication of application: **31.07.2024**
(21) Application number: 22960681.9
(22) Date of filing: 22.12.2022
(51) Int. Cl.: H01M 4/587

(54) **SECONDARY BATTERY AND BATTERY PACK**

(30) Priority: 26.09.2022 CN 202211179117
(71) Applicant: Sunwoda Mobility Energy Technology Co., Ltd., Shenzhen, Guangdong 518107 (CN)
(72) Inventor: CHEN, Yun, Shenzhen, Guangdong 518107 (CN); LI, Man, Shenzhen, Guangdong 518107 (CN); LIU, Peng, Shenzhen, Guangdong 518107 (CN); CHU, Chunbo, Shenzhen, Guangdong 518107 (CN)
(74) Representative: Stöckeler, Ferdinand
(86) International application number: PCT/CN2022/141180
(87) International publication number: WO 2024/066086

(57) **Abstract**

Disclosed are a secondary battery and a battery pack. In the secondary battery, a negative active material layer is disposed on a current collector of a negative electrode sheet, the negative electrode active material layer comprises a negative active materials, and the negative electrode sheet has a non-faradaic specific capacitance value of 50-250 nF/g, thereby ensuring the quantity of electrochemical active sites on the surface of the negative electrode sheet, facilitating the contact between the negative electrode sheet and an electrolyte, accelerating the ion-electron conduction rate, reducing the charge transfer resistance, effectively improving the charging rate capability of the secondary battery, improving the current density of the negative electrode sheet, improving the energy density of the secondary battery and realizing excellent dynamic performance and cycle performance of the secondary battery.

## Description

The present disclosure claims priority of Chinese Patent Application No. 202211179117.1, filed on September 26, 2022, and entitled "secondary battery and battery pack", the disclosure of which is incorporated herein by reference in its entirety.

### TECHNICAL FIELD

The present disclosure relates to the technical field of batteries, in particular to a secondary battery and a battery pack.

### BACKGROUND

With the rapid development of electric vehicles and digital electronics, secondary batteries with higher power density and energy density, which are suitable for rapid charging and discharging, are needed to be applied to electric vehicles and their electronic products. For electric vehicles, the energy density and charging time of secondary batteries, such as lithium-ion batteries, are two important technical indicators. The use of high-capacity batteries can achieve the maximum driving range, but it has a great impact on the fast charging performance.

Therefore, it is necessary to provide a secondary battery, so that the energy density and the fast charging performance of the secondary battery can be taken into account.

### SUMMARY

### TECHNICAL PROBLEMS

The present disclosure provides a secondary battery and a battery pack. The non-faradaic specific capacitance of a negative electrode plate is set to range from 50 nF/g to 250 nF/g, so as to ensure the number of electrochemically active sites on a surface of the negative electrode plate, which is beneficial to the contact between the negative electrode plate and electrolyte, thereby accelerating the ion-electron conduction rate, and reducing the charge transfer resistance. In this way, the charging rate performance of the secondary battery can be effectively improved, and the current density of the negative electrode plate and the energy density of the secondary battery can be improved at the same time, so that the secondary battery has excellent kinetic performance and cycle performance, and has a good application prospect.

### SOLUTIONS TO THE PROBLEMS

### TECHNICAL SOLUTIONS

A first aspect of the present disclosure provides a secondary battery, which includes a positive electrode plate, an electrolyte and a separator film. The secondary battery further includes a negative electrode plate, and the negative electrode plate includes a negative electrode current collector and a negative active material layer disposed on at least one surface of the negative electrode current collector. The negative active material layer includes a negative active material, and the negative active material includes graphite. The non-faradaic specific capacitance of the negative electrode plate is Cdl nF/g, 50≤Cdl≤250.

In some embodiments, a resistance of the negative active material layer is R mQ, 4≤0.1×Cdl-R≤24.

In some embodiments, a value range of R is 1≤R≤15.

In some embodiments, a porosity P of the negative electrode plate ranges from 20% to 40%.

In some embodiments, a coating weight of the negative active material layer on one surface of the negative electrode current collector is CW mg/cm², 7≤CW≤12.

In some embodiments, a bulk density of the negative active material ranges from 1 g/cm³ to 2.5 g/cm³.

In some embodiments, a dispersion of particles in the negative active material ranges from 1.5 to 5.

In some embodiments, the electrolyte includes a sulfur-containing additive including at least one of formulae (1) to (5):

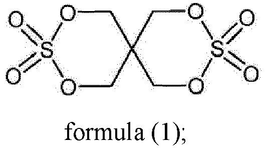

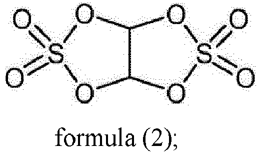

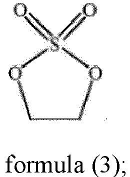

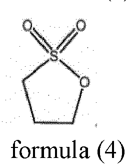

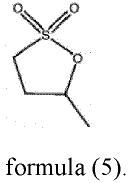

In some embodiments, a content of the sulfur-containing additive is A% based on a mass of the electrolyte, 0.05≤Cdl×A%≤12.5.

In some embodiments, the content of the sulfur-containing additive is A% based on a mass of the electrolyte, 0.01≤A≤5.

Meanwhile, a second aspect of the present disclosure also provides a battery pack including the secondary battery as described above.

### BENEFICIAL EFFECTS OF INVENTION

### BENEFICIAL EFFECTS

A secondary battery and a battery pack is provided. In the secondary battery, a negative active material layer is disposed on a current collector of a negative electrode plate, the negative active material layer includes negative active materials, and the non-faradaic specific capacitance of the negative electrode plate ranges from 50 nF/g to 250 nF/g, so as to ensure the number of electrochemically active sites on a surface of the negative electrode plate, which is beneficial to the contact between the negative electrode plate and electrolyte, thereby accelerating the ion-electron conduction rate, and reducing the charge transfer resistance. In this way, the charging rate performance of the secondary battery can be effectively improved, and the current density of the negative electrode plate and the energy density of the secondary battery can be improved at the same time, so that the secondary battery has excellent kinetic performance and cycle performance, and has a good application prospect.

### BRIEF DESCRIPTION OF THE DRAWINGS

### DESCRIPTION OF THE DRAWINGS

FIG. 1 is a cyclic voltammogram of the negative electrode plate prepared in Example 1 of the present disclosure at a sweep rate of 0.1 mv/s.
FIG. 2 is a linear sweep voltammogram of the negative electrode plate prepared in Example 1 of the present disclosure at a potential range of from 2.6 V to 2.7 V and a sweep rate of 0.1 mv/s.
FIG. 3 is a fitting curve of the sweep rate versus current density scatter plot of the negative electrode plate prepared in Example 1 of the present disclosure.

### EXAMPLES OF INVENTION

### EMBODIMENTS OF INVENTION

The present disclosure provides a secondary battery and a battery pack. In order to make the purpose, technical solutions and effects of the present disclosure more clear and definite, the present disclosure will be further described in detail with reference to the attached drawings and embodiments. It should be understood that the specific embodiments described herein are only used to explain the present disclosure, and are not intended to limit the present disclosure.

In an embodiment of the present disclosure, a secondary battery is provided. The secondary battery includes a positive electrode plate, a negative electrode plate, a separator film, an electrolyte, and a housing.

### I. Negative electrode plate

The negative electrode plate includes a negative electrode current collector and a negative active material layer disposed on at least one surface of the negative electrode current collector. The negative active material layer includes negative active material. The negative active material includes graphite.

The negative electrode plate is a single-sided plate or a double-sided plate. When the negative electrode plate is a single-sided plate, the negative active material layer is disposed on one surface of the negative electrode current collector; and when the negative electrode plate is a double-sided plate, the negative active material layer is disposed on both surfaces of the negative electrode current collector. The negative electrode plate may also have an area where both a single-sided negative electrode plate and a double-sided negative electrode plate exist.

### Non-faradaic specific capacitance of the negative electrode plate Cdl:

The non-faradaic specific capacitance of the negative electrode plate is Cdl nF/g, and the value range of Cdl is 50≤Cdl≤250. Specifically, Cdl may be 50, 70, 80, 140, 160, 180, 200, 205, 210, 250, or a range defined by any two of these numbers. The Faraday reaction in a battery refers to a process in which the oxidation state of the active material changes and charges move through the double charge layer to the inside of the active material through the electrode interface. The non-faraday reaction refers to a reaction in which charges are stored and released by the physical adsorption and detachment of ions on the electrode surface without charges moving through the electrode interface. The non-faradaic specific capacitance value, Cdl nF/g, reflects the number of electrochemically active sites in the negative electrode plate. In a certain range, Cdl increases and the number of electrochemically active sites increases, which is beneficial to the contact between the negative active material and electrolyte, thereby accelerating the conduction rate of ion-electron and reducing the resistance of charge transfer, so that the rate performance of the secondary battery can be effectively improved. In some embodiments, 80≤Cdl≤250, and the comprehensive performance of the secondary battery is further improved when the non-faradaic specific capacitance value of the negative electrode plate is within the above range.

In some embodiments, 80≤Cdl≤200, the comprehensive performance of the secondary battery can be better balanced and the comprehensive performance of the secondary battery is better when the non-faradaic specific capacitance value of the negative electrode plate is within the above-mentioned range.

### Resistance R of the negative active material layer:

In some embodiments, the relationship between R and Cdl is 4≤0.1×Cdl-R≤24. When the negative electrode plate satisfies the above relationship, ion transport path of the negative electrode plate is shorter, the electrochemical reaction is faster, and high-rate discharge performance can be realized. Further, when the negative electrode plate satisfies the above-mentioned relationship, electrolyte infiltration, surface impedance, and high-rate charging and discharging performance of the negative electrode plate are all in a suitable state, and expansion of the negative electrode plate during the cycle can also be reduced.

In some embodiments, the relationship between R and Cdl is 4≤0.1×Cdl-R≤14. When the negative electrode plate satisfies the above-mentioned relationship, the internal structure of the negative electrode plate can be further optimized, so that the comprehensive performance of the secondary battery can be improved.

In some embodiments, the resistance of the negative active material layer is R mQ, the value range of R is 1≤R≤15, and in particular, R may be 1, 3, 4, 6, 8, 10, 12, 15 or a range defined by any two of these numbers. The conductivity of electrons mainly affects the rate performance of the secondary battery. The important factors that affect the conductivity in the negative electrode plate of the secondary battery include interface between the negative electrode current collector and the negative active material layer, the distribution state of conductive agent, the contact state between particles, etc. The material performance in the negative electrode plate can be in a better state by controlling the diaphragm resistance (the resistance of the negative active material layer) of the negative electrode plate.

In some embodiments, the value range of R is 2≤R≤11. In case that the value of R is in this range, the conductive network inside the negative electrode plate is more perfect, and the comprehensive performance of the secondary battery is better. Moreover, in order to realize fast charging of the secondary battery, one of the key technologies is that the secondary battery can accept a relatively large charging current, which requires the polarization resistance of the battery itself to be small enough. In the present disclosure, the resistance R of the negative active material layer on the negative electrode plate is limited to 1≤R≤15, and 4≤0.1×Cdl-R≤24. That is, the diaphragm resistance is sufficiently small, resulting in the polarization resistance of the secondary battery itself being sufficiently small, and the number of electrochemically reaction active sites is in an optimal range, so that the comprehensive performance of the secondary battery is better.

In the embodiments of the present disclosure, method for testing the resistance R of the negative active material layer is as follows:
The negative electrode plate is cut into a disc with an area of 1540.25mm², which is placed in the middle of the probe of a diaphragm resistance tester, and then the negative electrode plate is tested by using the diaphragm resistance tester to obtain the resistance of the negative active material layer of the negative electrode plate. Ten negative electrode plate samples are selected and tested by using the diaphragm resistance tester respectively, and the obtained resistances of the negative active material layers of the ten tested negative electrode plates are averaged to obtain the resistance of the negative active material layer.

### Porosity P of the negative electrode plate:

In some embodiments, the porosity P of the negative electrode plate ranges from 20% to 40%, in particular, P may be 20%, 25%, 28%, 30%, 35%, 40% or a range defined by any two of these numbers. In case that the porosity of the negative electrode plate is within the above-mentioned range, the pore structure is richer, which not only increases the contact area between the electrode and the electrolyte, but also shortens the transport path of lithium ions, thus realizing rapid infiltration of the electrolyte, providing a smooth charge transport channel for the solid-liquid interface, and reducing the diffusion energy barrier, so that lithium ions can be quickly adsorbed and desorbed onto the surface of the negative materials, thereby accelerating the reaction kinetics. In another aspect, the polarization of the negative electrode surface is reduced, so that the current distribution is more uniform, and more negative active materials participate in accepting Li⁺ at the same time when charging at a high rate, thus effectively avoiding lithium precipitation on the negative electrode surface. Meanwhile, sufficient electrochemical reaction active sites can be provided during the electrochemical process, the non-faraday reaction process of the negative electrode is accelerated, which is beneficial to the transfer of electrons and ions between the solid phase and liquid phase, thereby improving the electrochemical reaction kinetics, and finally improving the rate performance of the materials.

The porosity of the negative electrode plate is calculated by P = (V₁-V₂)/V₁×100%, wherein Vi is the apparent volume of a sample and V₂ is the true volume of a sample. For testing methods, please refer to GB/T 33052-2016 porosity determination method.

### Coating weight of the negative active material layer CW:

In some embodiments, the coating weight of the negative active material layer on one surface of the negative electrode current collector is CW mg/cm², 7≤CW≤12. Exemplarily, CW can be 7, 9, 9.5, 10, 11, 12, or a range defined by any two of these numbers. In case that the non-faradaic specific capacitance value Cdl of the negative electrode plate ranges from 50nF/g to 250 nF/g and the coating weight of the negative active material layer is within the above range, the energy density of the negative electrode is ensured, and the electrolyte can be fully diffused on the negative electrode plate, so that excessive consumption of electrolyte for film formation is avoided, and excessive consumption of lithium ions is reduced. Meanwhile, polarization is reduced in the thickness direction of the negative electrode plate, which can avoid lithium precipitation on the negative electrode surface during rapid charging, and ensure the cycle life and initial efficiency of the secondary battery. In case that the coating weight of the negative active material layer falls within the range of 7mg/cm² to 12mg/cm², the migration distance of lithium ions in the negative electrode plate is short, showing a decrease in the charge transfer impedance, which is beneficial to improving the battery power performance, and at the same time, it can improve the current density of the electrode plate and the energy density of the battery.

Moreover, the change of coating weight changes the physical contact between particles in the negative active material layer and the pores between particles in the negative active material layer. Since the non-faraday reaction is a reaction in which ions are physically adsorbed and desorbed on the electrode surface to store and release charges, so change in the pores between particles in the negative active material layer will affect the size of the non-faradaic specific capacitance Cdl.

Coating weight of the negative active material layer = (weight of the negative electrode plate - weight of the negative electrode current collector)/area of the negative electrode plate. In case that the tested negative electrode plate is double-coated, the area of the negative electrode plate is 2 twice the area of the sample.

### Bulk density of negative active material:

In some embodiments, the bulk density of the negative active material in the negative active material layer ranges from 1g/cm³ to 2.5g/cm³. Exemplarily, the bulk density may be 1, 1.5, 1.8, 2.0, 2.2, 2.5, or within a range defined by any two of these numbers. The bulk density may reflect the average density of the bulk of the loose particle accumulation body including inner and outer pores of particles and gaps between the particles. It refers to the density calculated by dividing the mass of powder by the volume of the container occupied by the powder. The bulk density can be controlled within a specified range according to the particle size of the raw materials, calcining conditions, etc. The bulk density value reflects the uniformity of the negative active material particles. The more uniform the particles of the negative active materials are, the greater the porosity of the negative electrode plate will be, which can improve the liquid phase diffusion ability of the lithium ions, and facilitate the non-faraday reaction in the batteries. As a result, the non-faradaic specific capacitance Cdl of the negative electrode plate is increased, and the number of electrochemical active points is increased, which is conducive to the contact between the materials and the electrolyte, so that the conduction rate of the ion-electron is accelerated, the charge transfer resistance is low, and the rate performance can be effectively improved.

For the bulk density test of negative active materials, please refer to GB/T31057.1-2014 physical properties test of granular materials part I-measurement of bulk density.

### Dispersion of particles in the negative active materials:

In some embodiments, the dispersion of particles in the negative active materials ranges from 1.5 to 5. Exemplarily, the dispersion of particles may be in 1.5, 1.8, 2.0, 2.2, 2.5, 2.7, 3.0, 3.2, 3.5, 3.8, 4.0, 4.2, 4.5, 4.8, 5, or within a range defined by any two of these numbers. The dispersion of particles can reflect the distribution degree of various particle size components. The dispersion of particles affects the dispersion effect of powders during the stirring process, so that the obtained slurry has good uniformity and stability, is not easy to settle, can effectively regulate the uniformity of the coating weight of the negative electrode plate, thus enhancing the stability of the negative electrode plate. As a result, the non-Faraday process can be further controlled, so as to improve the transport efficiency of lithium ions between the positive and negative electrodes, and improve the rate performance of the secondary battery.

In some embodiments, the dispersion of particles in the negative active materials ranges from 1.5 to 3.5. When the dispersion of particles in the negative active materials is within this range, the uniformity of the negative electrode slurry is better, the apparent performance of the formed negative electrode plate is better, and the comprehensive performance of the secondary battery is better.

The dispersion of particles of the negative active material can be measured by using a laser particle size analyzer, and the dispersion of particles in the negative active materials is equal to (Dv99-Dv10)/Dv50.

### Test method for non-faradaic specific capacitance Cdl is as follows:

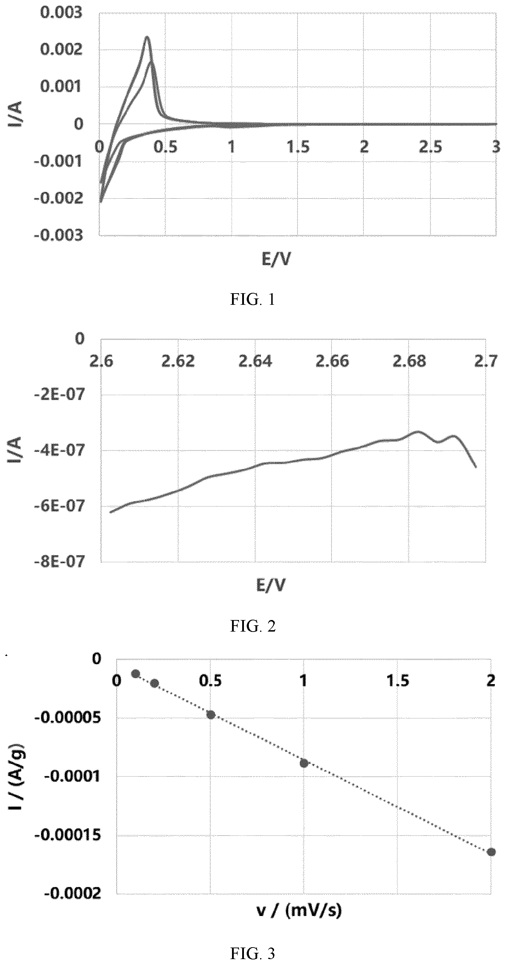

In some embodiments, referring to FIGs. 1 to 3, the method for testing the non-faradaic specific capacitance Cdl value of a negative electrode plate includes steps of:
S1. Confirmation of non-faraday potential range: assemble the negative electrode plate into a half cell (referred to as buckle) for cyclic voltammetry (CV) test, wherein the voltage ranges from 0.005 V to 3.0 V and the sweep rate ranges from 0.1 mV/s to 1 mV/s. FIG. 1 is a cyclic voltammogram of the negative electrode plate at a sweep rate of 0.1 mv/s. It can be seen from FIG. 1 that the cyclic voltammetry diagram includes two curves, and the two curves only represent two circles swept at the same sweep rate. Since the first circle is irreversible, the peak positions of the two circles will be different, while the non-faraday potential range is the straight section of the curve, i.e., a range from 1.5 V to 3V.
S2. Non-Faraday potential range cathodic scanning: a linear sweep voltammetry (LSV) test is performed within a potential range selected from the potential range of 1.5 V to 3 V, the scanning direction is from high potential to low potential, and a voltage-current curve is collected. The selected potential range is from 2.6 V to 2.7 V, and the sweep rate ranges from 0.05 mV/s to 5 mV/s. FIG. 2 shows a linear sweep voltammogram at a sweep rate of 0.1 mv/s.

Further, the median value U V, U=2.65 of the potential range of 2.6 V to 2.7 V is selected at a sweep rate of 0.1 mv/s, so that the corresponding current value is obtained, and the current density value J1 is calculated according to the mass of the corresponding active materials, wherein the unit is A/g. In the sweep rate range of 0.05 mV/s to 5 mV/s, current values corresponding to the median value U at different sweep rates are selected respectively, and different current density values are calculated to obtain the sweep rate versus current density scatter plot.

S3. Calculation of non-faradaic specific capacitance value: A linear function is obtained by fitting according to the sweep rate versus current density scatter plot obtained in step S2, and the slope K of the linear function is the non-faradaic specific capacitance value Cdl in the cathodic scanning direction of the negative electrode plate.

Assembling method of buckle is as follows: the obtained negative electrode plate is dried, cut into small discs, weighed, and transferred to a vacuum oven, in which the discs are dried at 100°C for 8 hours, and then transferred to a glove box filled with argon for assembling of half-cell electrode. The assembling method is the conventional assembling method in this field. The non-faraday potential range is determined by cyclic voltammetry curve, and then the current value is measured by linear voltammetry sweep curve in the potential range, and the non-faradaic specific capacitance value Cdl is calculated.

### Negative current collector:

In some embodiments, the negative electrode current collector includes, but is not limited to, a metal foil, a metal cylinder, a metal tape roll, a metal plate, a metal film, a metal plate mesh, a stamped metal, a foamed metal, and the like. In some embodiments, the negative electrode current collector is a metal foil. In some embodiments, the negative electrode current collector is an aluminum foil or a copper foil. As used herein, the term "copper foil" includes a copper alloy foil.

In some embodiments, the negative electrode current collector is a conductive resin. In some embodiments, the conductive resin includes a film obtained by evaporating copper on a polypropylene film.

### Negative active material layer:

The negative active material layer may be one or more layers, and each of the multiple layers of the negative active material layer may contain the same or different negative active materials. The negative active material is any material that can reversibly adsorb and desorb metal ions such as lithium ions. In some embodiments, the chargeable capacity of the negative active material is greater than the discharge capacity of the positive active material, so as to prevent lithium metal from precipitating on the negative electrode plate during charging.

In some embodiments, the thickness of the negative active material layer refers to the thickness of the negative active material layer coated on a single side of the negative electrode current collector. In some embodiments, the thickness of the single-sided negative active material layer is equal to or greater than 15 µm. In some embodiments, the thickness of the single-sided negative active material layer is equal to or greater than 20 µm. In some embodiments, the thickness of the single-sided negative active material layer is equal to or greater than 30 µm. In some embodiments, the thickness of the single-sided negative active material layer is equal to or less than 150 µm. In some embodiments, the thickness of the single-sided negative active material layer is equal to or less than 120 µm. In some embodiments, the thickness of the single-sided negative active material layer is equal to or less than 100 µm. In some embodiments, the thickness of the negative active material layer is within a range defined by any two of these values. When the thickness of the negative active material layer is within the above range, the electrolyte may penetrate to the vicinity of the negative electrode current collector interface to improve the charge and discharge characteristics of the secondary battery under high current density. Meanwhile, the volume ratio of the negative electrode current collector to the negative active material is within an appropriate range, so that the capacity of the secondary battery can be ensured.

In some embodiments, the negative active material layer includes negative active materials, conductive agents, binders, and dispersants.

### Negative active materials:

In some embodiments, the negative active materials include one or more of artificial graphite, natural graphite, soft carbon, hard carbon, amorphous carbon, carbon nanotubes, and mesophase carbon microspheres.

### Conductive agents:

In some embodiments, the conductive agents include one or more of carbon black, graphite, carbon fibers, carbon nanotubes, or graphene, optionally carbon black.

### Binders:

The binders can improve the adhesion between the negative active materials. The type of binders is not particularly limited, as long as it is a material that is stable for the solvent used in the manufacture of the electrolyte or electrode. In some embodiments, the binders include sodium carboxymethyl cellulose and styrene-butadiene rubber.

### Dispersants:

In some embodiments, the dispersants include diethylhexanol, which is an environmentally friendly organic compound with low price and wide sources. Its surface tension is low and it is easy to adsorb and spread on the surface of the liquid. The material is subjected to shearing and friction of a mechanical force, at the same time, there will be internal friction between the particles. Under the action of various forces, the raw material particles tend to be highly dispersed, so that the slurry is more uniform, and the dispersion effect is good. The prepared dry electrode plate has a uniform thickness, so as to avoid problems such as wrinkling that affect the electric performance, thus enhancing the stability of the electrode plates, improving the transport efficiency of lithium ions between positive and negative electrode plates, reducing electrochemical polarization, and accelerating the non-faraday reaction process, which can meet the requirements of rate performance and cycle life for power batteries.

### II. Electrolyte

In some embodiments, the electrolyte includes a sulfur-containing additive including at least one of formulae (1) to (5):

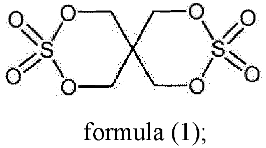

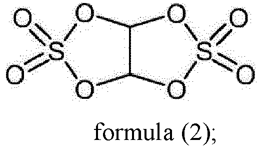

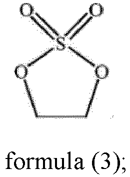

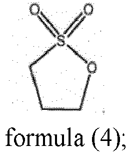

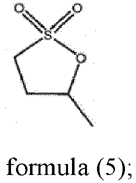

The content of the sulfur-containing additive is A% based on the mass of the electrolyte, 0.05≤Cdl×A%≤12.5, optionally 0.01≤A≤5. Exemplarily, A may be 0.1, 0.5, 0.7, 1, 1.5, 1.8, 2.2, 2.7, 3, 4 or a range defined by any two of these numbers. When the non-faradaic specific capacitance of the negative electrode plate ranges from 50nF/g to 250nF/g, and the electrolyte contains the sulfur-containing additives, the sulfur-containing additives have high stability and high ion conductivity, the interface film formed by them is mainly composed of organic sulfides and has small impedance, so that conductivity of lithium ions is improved, service life of the secondary battery is prolonged, side reactions of the electrolyte components themselves and the reactions between the electrolyte components and the negative electrode materials are reduced, the migration rate of lithium ions is improved, and the impedance of the SEI film is reduced, thereby reducing the impedance of the secondary battery, reducing the polarization phenomenon, and improving the charge and discharge efficiency. Meanwhile, the negative electrode plate is prevented from lithium precipitation causing internal short circuit of the secondary battery. The combination of the negative electrode plate and the electrolyte is helpful to improve the battery cycle performance. Appropriate contents of sulfur-containing additives can improve lithium ion conduction efficiency, accelerate the non-Faraday reaction process, and improve the ability of fast charging at high rates. In some embodiments of the present disclosure, 0.1≤A≤4. In some embodiments of the present disclosure, 0.5≤A≤3. When the mass percentage of the sulfur-containing additives is within the above range, and the non-faradaic specific capacitance of the negative electrode plate ranges from 50nF/g to 250nF/g, an electrochemical reaction is performed between the two, so that the protective film formed is relatively complete and the film density is appropriate, the polarization phenomenon is reduced, and the cycle performance of the secondary battery is improved.

### Lithium salts:

In some embodiments, the lithium salts include at least one of lithium hexafluorophosphate, organic borate lithium, lithium perchlorate, and lithium sulfonimide salts. The content of lithium salts is not particularly limited, as long as the effect of the present disclosure is not impaired.

### III. Positive electrode plate

The positive electrode plate includes a positive electrode current collector and a positive active material layer disposed on the positive current collector.

### Positive active material layer:

The positive active material layer may be one or more layers. Each layer of the multiple layers of positive active materials may contain the same or different positive active materials. The positive active materials are any materials that can reversibly adsorb and desorb metal ions such as lithium ions.

In some embodiments, the positive active materials include one or more of lithium manganate, lithium iron phosphate (LFP), and ternary materials.

In some embodiments, the positive active materials include ternary materials, which may include lithium nickel-cobalt-manganese oxides and/or lithium nickel-cobalt-aluminum oxides.

In some embodiments, the positive active materials include lithium nickel-cobalt-manganese oxides, and the content of the nickel element is greater than or equal to 0.5 based on a molar ratio of nickel element, cobalt element and manganese element as 1.

In some embodiments, the positive active materials include lithium nickel-cobalt-manganese oxides, the content of the nickel element is less than or equal to 0.85 based on a molar ratio of nickel element, cobalt element and manganese element as 1.

In some embodiments, the positive active materials include doping elements and/or coating elements, and the doping elements and/or the coating elements are not particularly required as long as the positive active materials are more stable.

In addition, the positive active materials further include positive conductive agents, positive binders, and solvents.

### Positive conductive agent:

The type of positive conductive agents is not limited, and any known conductive agents can be used. Examples of the positive conductive agents may include, but are not limited to, graphite such as natural graphite, artificial graphite, or the like; carbon black such as acetylene black, or the like; amorphous carbon such as needle coke, or the like; carbon nanotubes; graphene, etc. The above-mentioned positive conductive agents may be used alone or in any combination.

### Positive binder:

The type of the positive binders used in the production of the positive active material layer is not particularly limited, and in the case of coating method, any material that can be dissolved or dispersed in the liquid medium used in the production of electrodes. Examples of the positive binders may include, but are not limited to, one or more of resin-based polymers, such as polyethylene, polypropylene, polyethylene terephthalate, polymethyl methacrylate, polyimide, aromatic polyamide, cellulose, nitrocellulose; rubbery polymers, such as styrene-butadiene rubber (SBR), nitrile rubber (NBR), fluorine rubber, isoprene rubber and ethylene-propylene rubber; thermoplastic elastomeric polymers, such as styrene · butadiene · styrene block copolymer or hydrogenation products thereof, ethylene · propylene · diene terpolymer (EPDM), styrene · ethylene · butadiene · ethylene copolymer, styrene · isoprene · styrene block copolymer or hydrogenation products thereof; soft resinous polymers, such as syndiotactic-1,2-polybutadiene, polyvinyl acetate, ethylene · vinyl acetate copolymer and propylene-α-olefin copolymer; fluorocarbon-based polymers, such as polyvinylidene fluoride, polytetrafluoroethylene, fluorinated polyvinylidene fluoride, and polytetrafluoroethylene · ethylene copolymer; polymer compositions having ionic conductivity for alkali metal ions (particularly lithium ions). The positive electrode binders may be used alone or in any combination.

### Solvent:

There is no limit to the type of solvents used to form a positive electrode slurry, as long as it is a solvent that can dissolve or disperse the positive active materials, the positive conductive agents, and the positive binders. Examples of the solvent for forming the positive electrode slurry may include any one of an aqueous solvent and an organic solvent. Examples of the aqueous solvent may include, but are not limited to, water, a mixed medium of alcohol and water, and the like. Examples of the organic solvent may include, but are not limited to, solvents such as diethylenetriamine, N, N-dimethylaminopropylamine, diethyl ether, propylene oxide, tetrahydrofuran (THF), N-methylpyrrolidone (NMP), dimethylformamide, dimethylacetamide, hexamethylphosphamide, dimethyl sulfoxide, and the like.

### Positive electrode current collector:

The type of positive electrode current collector is not particularly limited, and it may be any known material suitable for use as the positive electrode current collector. Examples of the positive electrode current collector may include, but are not limited to, metallic materials, such as aluminum, stainless steel, nickel plating, titanium, tantalum, and the like; carbon materials, such as carbon cloth, carbon paper, and the like; composite materials formed of polymers and metal layers. In some embodiments, the positive electrode current collector is a metallic material. In some embodiments, the positive electrode current collector is aluminum.

The form of the positive electrode current collector is not particularly limited. When the positive electrode current collector is a metallic material, the form of the positive electrode current collector may include, but is not limited to, a metal foil, a metal cylinder, a metal tape roll, a metal plate, a metal film, a metal plate mesh, a stamped metal, a foamed metal, and the like. When the positive electrode current collector is a carbon material, the form of the positive electrode current collector may include, but is not limited to, a carbon plate, a carbon film, a carbon cylinder, and the like. In some embodiments, the positive electrode current collector is a metal foil. In some embodiments, the metal foil is in the form of a mesh. The thickness of the metal foil is not particularly limited. In some embodiments, the thickness of the metal foil is greater than 1 µm, greater than 3 µm, or greater than 5 µm. In some embodiments, the thickness of the metal foil is less than 1 mm, less than 50 µm, or less than 20 µm. In some embodiments, the thickness of the metal foil is within a range defined by any two of these values described above.

### IV, separator film

A separator film is usually disposed between the positive electrode and the negative electrode for the purpose of inhibiting a short circuit. In this case, the electrolyte of the present disclosure is usually used by penetrating into the separator film.

### V. Application

Embodiments of the present disclosure further provides a battery pack, including the secondary battery described above. As a typical application, the battery pack can be used in, but is not limited to, electric toys, electric tools, electric trucks, electric vehicles, energy storage equipment, ships, spacecraft, and the like.

The preparation method of the secondary battery provided in the present disclosure will be described below with reference to the specific examples as follows:

### Example 1

### Preparation of positive electrode plate:

Preparing a positive electrode slurry by using positive active materials, positive conductive agents, positive binders and a solvent according to the formula, wherein a ratio of positive active material NCM 811 to positive conductive agent carbon black to positive electrode binder polyvinylidene fluoride (PVDF) is 96: 2: 2 in terms of mass percentage, and the solvent is N-methylpyrrolidone (NMP). Coating the prepared positive electrode slurry uniformly on both surfaces of a positive electrode current collector (aluminum foil), and then drying at 120°C to obtain a positive electrode plate. The thickness of the positive electrode plate is controlled by rolling, so that the compacted density is controlled to be 3.5g/cm³.

### Preparation of negative electrode plate:

Firstly, preparing a negative electrode slurry, in which the negative active material includes artificial graphite, conductive agent carbon black, sodium carboxymethyl cellulose, styrene-butadiene rubber and diethyl hexanol with a mass ratio of 96.5:1.2:1.2:1.0:0.1. The bulk density of artificial graphite is 1.5 g/cm³ and the dispersion of artificial graphite is 2.0.

The specific preparation method of the negative electrode slurry is as follows: Firstly, adding 50% artificial graphite, conductive agent carbon black, 50% artificial graphite and 70% sodium carboxymethyl cellulose sequentially into a double planetary mixer; followed by adjusting the revolving speed of the mixer to 20 r/min and the rotating speed to 800 r/min, and mixing the above materials evenly by stirring at a low speed for 30 min, then adding part of deionized water and stirring for 1 h to form a first mixing powders. Secondly, carrying out scraping and turning bottom, adding the remaining 30% sodium carboxymethyl cellulose and deionized water into the first mixing powders, followed by adjusting the revolving speed of the mixer to 25 r/min and the rotating speed to 2500 r/min, and stirring at a high speed for 90 min. The vacuum degree is controlled to be -0.085 MPa in the process. Then dispersing the slurry, and forming a second mixing solution. Thirdly, carrying out scraping and turning bottom, adding binder styrene-butadiene rubber and 50% diethylhexanol into the second mixing solution, followed by adjusting the revolving speed of the mixer to 20 r/min and the rotating speed to 500 r/min, and stirring at a low speed for 30 min to form a third mixing solution, wherein vacuum degree is controlled to be -0.085 MPa in the process. Fourthly, adding 50% diethylhexanol into the third mixing solution, followed by adjusting the revolving speed of the mixer to 10 r/min and the rotating speed to 100 r/min, and stirring for 30 min to form a fourth mixing solution, wherein vacuum degree is controlled to be -0.085 MPa in the process. Finally, adding deionized water to further adjust the viscosity of the slurry. Stirring for 30 min at a revolving speed of 25 r/min and a rotating speed of 300 r/min is more conducive to uniform dispersion of the slurry. The vacuum degree is controlled to be -0.085 MPa in the process. When the viscosity of the slurry is between 2000 mPa·s and 3500 mPa s, the slurry is qualified. Carrying out defoaming at a rotation speed is 200 r/min, followed by storing, and discharging through a 200-mesh screen to obtain the negative electrode slurry. Coating the prepared negative electrode slurry uniformly on one or both sides of the negative electrode current collector copper foil, controlling the coating surface density at 9.5 mg/cm², baking and drying, followed by rolling and cutting to obtain the negative electrode plate. The baking is carried out at a temperature of 90°C to 110 °C. The drying is carried out for 24 h. The porosity P of the negative electrode after rolling is 30%.

The preparation of the negative electrode slurry is mainly carried out by fully mixing the active materials with the inactive components, giving full play to the electrochemical performance of the electrode plate, which can obtain uniform slurry, avoid agglomeration and sedimentation, ensure controllable coating weight of the electrode plate, and ensure the matching of the active materials and the inactive components, ensure the movement of the lithium ions between the positive and negative electrodes, and improve the electrochemical performance of the battery as a whole.

### Preparation of electrolyte:

Mixing ethylene carbonate (EC), methyl ethyl carbonate (EMC) and diethyl carbonate (EDC) at a volume ratio of 1:1:1, then adding 1 mol/L of LiPF₆, and mixing evenly to prepare the electrolyte.

### Preparation of a secondary battery:

Drying the negative electrode plate and the positive electrode plate prepared in the above steps, and winding them into a winding battery core together with a separator film by using a winding mechanism. Welding the positive electrode aluminum tabs and the negative electrode copper-plated nickel electrode tabs onto the battery core, and placing the welded battery core into an aluminum film that has been punched for package. The separator film is a quarantine film. Then liquid injection and formation into a constant volume is carried to form the secondary battery.

Non-faradaic specific capacitance value Cdl test of negative electrode plate:
Step 1, disassembling the secondary battery in the glove box to obtain an overhang area electrode plate in the negative electrode, soaking it in a dimethyl carbonate (DMC) solution, then cutting and assembling it with a metal lithium plate to form a buckle-type half-cell; or cutting a negative electrode plate which is not assembled into a battery and assembling it with the metal lithium plate into a button-type half-cell.
Step 2, carrying out the CV test on the button-type half-cell in the voltage range of 0.005 V to 3.0 V at a sweep rate of 0.1 mV/s, and confirming that the non-faraday potential range is from 2.6 V to 2.7 V.
Step 3, carrying out the LSV test from 2.7 V to 2.6 V. The sweep rates are 0.1 mV/s, 0.2 mV/s, 0.5 mV/s, 1 mV/s and 2 mV/s respectively. The median value of the selected potential range is 2.65 V. The corresponding current values obtained are -4.32E-07 A, -5.50E-07 A, -1.15E-06 A, -2.08E-06 A and -3.80E-06 A. The current density values calculated according to the corresponding active material mass 0.02175g are -1.25E-05 A/g, -2.08E-05 A/g, -4.75E-05 A/g, - 8.87E-05 A/g and -1.64E-04 A/g respectively.

In step 4, drawing a sweep rate versus current density scatter plot according to the sweep rates and current density values obtained in step 3, and fitting to obtain a linear function, and the slope -8E-05 of the linear function is the non-faradaic specific capacitance 80 nF/g in the cathodic scanning direction of the negative electrode plate.

The overhang area electrode plate in the negative electrode refers to a portion of the negative electrode plate that exceeds the positive electrode plate in both the length and width directions.

### Example 2

A secondary battery is prepared according to the method of Example 1, except for the following differences:
The coating weight CW mg/cm² of the negative electrode plate when coating is 7 mg/cm², the porosity P of the negative electrode plate is 25%, the resistance R mQ of the negative active material layer is 3 mΩ, and the non-faradaic specific capacitance Cdl nF/g of the negative electrode plate is 140 nF/g.

### Example 3

A secondary battery is prepared according to the method of Example 1, except for the following differences:
The coating weight CW mg/cm² of the negative electrode plate when coating is 12 mg/cm², the porosity P of the negative electrode plate is 25%, the resistance R mQ of the negative active material layer is 15 mΩ, and the non-faradaic specific capacitance Cdl nF/g of the negative electrode plate is 200 nF/g.

### Example 4

A secondary battery is prepared according to the method of Example 1, except for the following differences:
The coating weight CW mg/cm² of the negative electrode plate when coating is 9 mg/cm², the porosity P of the negative electrode plate is 20%, the resistance R mQ of the negative active material layer is 1 mQ, and the non-faradaic specific capacitance Cdl nF/g of the negative electrode plate is 250 nF/g.

### Example 5

A secondary battery is prepared according to the method of Example 1, except for the following differences:
The coating weight CW mg/cm² of the negative electrode plate when coating is 9 mg/cm², the porosity P of the negative electrode plate is 40%, the resistance R mQ of the negative active material layer is 8 mΩ, and the non-faradaic specific capacitance Cdl nF/g of the negative electrode plate is 50 nF/g.

### Example 6

A secondary battery is prepared according to the method of Example 1, except for the following differences:
The coating weight CW mg/cm² of the negative electrode plate when coating is 12 mg/cm², the porosity P of the negative electrode plate is 25%, the resistance R mQ of the negative active material layer is 15 mΩ, and the non-faradaic specific capacitance Cdl nF/g of the negative electrode plate is 200 nF/g.

### Example 7

A secondary battery is prepared according to the method of Example 1, except for the following differences:
The coating weight CW mg/cm² of the negative electrode plate when coating is 10.5 mg/cm², the porosity P of the negative electrode plate is 26%, the resistance R mQ of the negative active material layer is 12 mΩ, and the non-faradaic specific capacitance Cdl nF/g of the negative electrode plate is 230 nF/g.

### Example 8

A secondary battery is prepared according to the method of Example 1, except for the following differences:
The coating weight CW mg/cm² of the negative electrode plate when coating is 9 mg/cm², the porosity P of the negative electrode plate is 20%, the resistance R mQ of the negative active material layer is 2 mQ, and the non-faradaic specific capacitance Cdl nF/g of the negative electrode plate is 250 nF/g.

### Example 9

A secondary battery is prepared according to the method of Example 1, except for the following differences:
The coating weight CW mg/cm² of the negative electrode plate when coating is 10 mg/cm², the porosity P of the negative electrode plate is 40%, the resistance R mQ of the negative active material layer is 2 mΩ, and the non-faradaic specific capacitance Cdl nF/g of the negative electrode plate is 50 nF/g.

### Example 10

A secondary battery is prepared according to the method of Example 1, except for the following differences:
The coating weight CW mg/cm² of the negative electrode plate when coating is 9.2 mg/cm², the porosity P of the negative electrode plate is 30%, the resistance R mQ of the negative active material layer is 2.5 mQ, and the non-faradaic specific capacitance Cdl nF/g of the negative electrode plate is 65 nF/g.

### Example 11

A secondary battery is prepared according to the method of Example 1, except for the following differences:
The coating weight CW mg/cm² of the negative electrode plate when coating is 9.1 mg/cm², the porosity P of the negative electrode plate is 25%, the resistance R mQ of the negative active material layer is 6.3 mΩ, and the non-faradaic specific capacitance Cdl nF/g of the negative electrode plate is 150 nF/g.

### Example 12

A secondary battery is prepared according to the method of Example 1, except for the following differences:
The coating weight CW mg/cm² of the negative electrode plate when coating is 6.9 mg/cm², the porosity P of the negative electrode plate is 30%, the resistance R mQ of the negative active material layer is 9.5 mΩ, and the non-faradaic specific capacitance Cdl nF/g of the negative electrode plate is 150 nF/g.

### Example 13

A secondary battery is prepared according to the method of Example 1, except for the following differences:
The coating weight CW mg/cm² of the negative electrode plate when coating is 10 mg/cm², the porosity P of the negative electrode plate is 22%, the resistance R mQ of the negative active material layer is 11 mQ, and the non-faradaic specific capacitance Cdl nF/g of the negative electrode plate is 150 nF/g.

### Comparative example 1

A secondary battery is prepared according to the method of Example 1, except for the following differences:
The coating weight CW mg/cm² of the negative electrode plate when coating is 5 mg/cm², the porosity P of the negative electrode plate is 42%, the resistance R mQ of the negative active material layer is 10 mQ, and the non-faradaic specific capacitance Cdl nF/g of the negative electrode plate is 260 nF/g.

### Comparative example 2

A secondary battery is prepared according to the method of Example 1, except for the following differences:
The coating weight CW mg/cm² of the negative electrode plate when coating is 14 mg/cm², the porosity P of the negative electrode plate is 18%, the resistance R mQ of the negative active material layer is 12 mΩ, and the non-faradaic specific capacitance Cdl nF/g of the negative electrode plate is 45 nF/g.

The performance test process and test results of the secondary battery according to the embodiments of the present disclosure are as follows:

### (1) Kinetic performance test

Allowing the secondary battery to stand for 30 min at 25°C, fully charging at x C, and fully discharging at 1 C, repeating this process for 10 times, then fully charging at x C, followed by disassembling the negative electrode plate and observing the lithium precipitation on the surface of the negative electrode plate. If lithium is not precipitated on the surface of the negative electrode, the charge rate x C is increased by 0.1 C to repeat the above test until lithium is precipitated on the surface of the negative electrode, and the test is stopped. The charging rate x C at this time minus 0.1 C is the maximum charge rate of the battery.

### (2) Energy density test

Allowing the secondary battery to stand for 30 min at 25°C, fully charging at 1 C, and fully discharging at 1 C, and then weighing the lithium ion battery by using an electronic balance. The ratio of 1 C actual discharge energy to the weight is the actual energy density of the secondary battery. When the actual energy density is less than 80% of the target energy density, the actual energy density of the secondary battery is considered to be very low. When the actual energy density is greater than or equal to 80% and less than 95% of the target energy density, the actual energy density of the secondary battery is considered to be low. When the actual energy density is greater than or equal to 95% and less than 105% of the target energy density, the actual energy density of the secondary battery is considered to be moderate. When the actual energy density is greater than or equal to 105% and less than 120% of the target energy density, the actual energy density of the secondary battery is considered to be high. When the actual energy density is 120% of the target energy density, the actual energy density of the secondary battery is considered to be very high.

### (3) Cyclic performance test

Allowing the secondary battery to stand for 30 min at 25°C, and conducting constant-current discharging at 1 C, followed by standing for 10 min and conducting constant-current and constant-voltage charging at 1 C, and standing for 10 min, then carrying out full charge and full discharge cycle test. The capacity retention rate after 1,000 cycles is recorded.

The performance test results of the secondary batteries provided in Examples 1 to 13 and the performance test results of the secondary batteries provided in Comparative Examples 1 and 2 are shown in Table 1.

**Table 1**

| | CW | P (%) | R | Cdl | 0.1×Cdl-R | Ratio of energy density (%) | Capacity retention rate (%) | Kinetic performance (C) |
|---|---|---|---|---|---|---|---|---|
| Example 1 | 9.5 | 30 | 4.6 | 80 | 3.4 | 125 | 95 | 2.5 |
| Example 2 | 8 | 30 | 5 | 100 | 5 | 112 | 94 | 3.5 |
| Example 3 | 7.5 | 35 | 2 | 120 | 10 | 108 | 95 | 3.8 |
| Example 4 | 7 | 25 | 3 | 140 | 11 | 105 | 92 | 4 |
| Example 5 | 8.5 | 35 | 2.5 | 160 | 13.5 | 118 | 92 | 3.7 |
| Example 6 | 12 | 25 | 15 | 200 | 5 | 133 | 96 | 2 |
| Example 7 | 10. 5 | 26 | 12 | 230 | 11 | 128 | 94 | 2.4 |
| Example 8 | 9.2 | 30 | 3 | 250 | 22 | 110 | 92 | 2.6 |
| Example 9 | 10 | 40 | 2 | 50 | 3 | 115 | 91 | 2.4 |
| Example 10 | 9.2 | 30 | 2.5 | 65 | 4 | 120 | 91 | 2.5 |
| Example 11 | 9.1 | 25 | 6.3 | 150 | 8.7 | 122 | 93 | 3.1 |
| Example 12 | 9.6 | 30 | 9.5 | 150 | 5.5 | 125 | 91 | 2.6 |
| Example 13 | 10 | 22 | 11 | 150 | 4 | 124 | 91 | 2.2 |
| Comparative example 1 | 5 | 42 | 10 | 260 | 16 | 75 | 85 | 1.2 |
| Comparative example 2 | 14 | 18 | 12 | 45 | -7.5 | 85 | 86 | 1.5 |

As can be seen from Table 1, the secondary batteries provided in Examples 1 to 13 have excellent kinetic performance, high or very high energy density, and a high capacity retention rate of 91% to 96%, so that the secondary batteries provided by Examples of the present disclosure can be quickly charged at a high rate, and at the same time, the secondary batteries have high or even very high energy density and excellent cycle performance (the capacity retention rate of cycle performance is as high as 91% to 96%).

In contrast, in Comparative Example 1, the coating weight of the negative active material layer is 5 mg/cm², the porosity P of the negative electrode plate is 42.0%, and the non-faradaic specific capacitance value Cdl of the negative electrode plate is as high as 260 nF/g. As a result, the secondary battery provided in Comparative Example 1 has poor kinetic performance, very low energy density, and the capacity retention rate after the cycle performance test is only 85%. In Comparative Example 2, the coating weight of the negative active material layer is 14 mg/cm², the porosity P of the negative electrode plate is 18%, and the non-faradaic specific capacitance value Cdl of the negative electrode plate is 260. The secondary battery provided in Comparative Example 2 deteriorates, although it has a high energy density, the capacity retention rate after the cyclic performance test is only 86%.

Therefore, it is difficult for the secondary batteries provided by Comparative Example 1 and Comparative Example 2 to charge quickly at a high rate while maintaining a high energy density and excellent cycle performance.

### Example 14

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 1.5 g/cm³, the dispersion of particles in the negative active materials is 2, and the non-faradaic specific capacitance Cdl nF/g of the negative electrode plate is 200 nF/g.

### Example 15

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 1 g/cm³, the dispersion of particles in the negative active materials is 1.5, and the non-faradaic specific capacitance Cdl nF/g of the negative electrode plate is 240 nF/g.

### Example 16

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 1.8 g/cm³, the dispersion of particles in the negative active materials is 2.5, and the non-faradaic specific capacitance Cdl nF/g of the negative electrode plate is 180 nF/g.

### Example 17

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 2 g/cm³, the dispersion of particles in the negative active materials is 3, and the non-faradaic specific capacitance Cdl nF/g of the negative electrode plate is 150 nF/g.

### Example 18

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 2.2 g/cm³, the dispersion of particles in the negative active materials is 4, and the non-faradaic specific capacitance Cdl nF/g of the negative electrode plate is 100 nF/g.

### Example 19

A secondary battery is prepared according to the method of Example 1, wherein the coating weight CW mg/cm² of the negative active material layer is 9 mg/cm², and the porosity P is 35%, the rest is the same as Example 1, except for the following differences:
The bulk density of the negative active material is 2.5 g/cm³, the dispersion of particles in the negative active materials is 5, and the non-faradaic specific capacitance Cdl nF/g of the negative electrode plate is 60 nF/g

The performance test results of the secondary batteries provided in Examples 14 to 19 are shown in Table 2.

**Table 2**

| | Bulk density (g/cm³) | Dispersion of particles | Cdl | Kinetic performance (C) | Capacity retention rate (%) |
|---|---|---|---|---|---|
| Example 14 | 1.5 | 2 | 200 | 3.5 | 95 |
| Example 15 | 1 | 1.5 | 240 | 4 | 94 |
| Example 16 | 1.8 | 2.5 | 180 | 3.1 | 92 |
| Example 17 | 2 | 3 | 150 | 2.6 | 93 |
| Example 18 | 2.2 | 4 | 100 | 2.3 | 94 |
| Example 19 | 2.5 | 5 | 60 | 2 | 92 |

As can be seen from Table 2, among the kinetic performance test results of the secondary batteries provided in Examples 14 to 19, the kinetic performance is as high as 2 C to 4 C, so that the secondary batteries provided in Examples 14 to 19 can be quickly charged at a high rate, and at the same time, the secondary batteries have high or even very high energy density and excellent cycle performance.

### Example 20

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 0.05%.

### Example 21

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 0.1%.

### Example 22

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 0.5%.

### Example 23

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 1%.

### Example 24

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 2%.

### Example 25

A secondary battery is prepared according to the method of Example 1, except for the following differences:
The sulfur-containing additive shown in formula (4) is selected as the sulfur-containing additive in the electrolyte, and the content of the sulfur-containing additive in the electrolyte is 5%.

### Example 26

A secondary battery is prepared according to the method of Example 1, except for the following differences:
The sulfur-containing additive shown in formula (3) is selected as the sulfur-containing additive in the electrolyte, and the content of the sulfur-containing additive in the electrolyte is 0.1%.

### Example 27

A secondary battery is prepared according to the method of Example 1, except for the following differences:
The sulfur-containing additive shown in formula (3) is selected as the sulfur-containing additive in the electrolyte, and the content of the sulfur-containing additive in the electrolyte is 1%.

### Example 28

A secondary battery is prepared according to the method of Example 1, except for the following differences:
The combination of formulae (3) and (4) are selected as the sulfur-containing additives in the electrolyte, and the content of the sulfur-containing additive shown in formula (3) in the electrolyte is 0.5%, and the content of the sulfur-containing additive shown in formula (4) is 0.5%.

### Example 29

A secondary battery is prepared according to the method of Example 1, except for the following differences:
The combination of formulae (1) and (3) are selected as the sulfur-containing additives in the electrolyte, and the content of the sulfur-containing additive shown in formula (1) in the electrolyte is 0.3%, and the content of the sulfur-containing additive shown in formula (3) is 0.5%.

The performance test results of the secondary batteries provided in Examples 14 to 19 are shown in Table 3.

**Table 3**

| | Type of sulfur-containing additive | Content of sulfur-containing additive (%) | Kinetic performance (C) | Capacity retention rate(%) |
|---|---|---|---|---|
| Example 20 | Formula (4) | 0.05 | 2.6 | 95 |
| Example 21 | Formula (4) | 0.1 | 2.8 | 95 |
| Example 22 | Formula (4) | 0.5 | 3.1 | 96 |
| Example 23 | Formula (4) | 1 | 3.6 | 97 |
| Example 24 | Formula (4) | 2 | 4 | 95 |
| Example 25 | Formula (4) | 5 | 2.9 | 94 |
| Example 26 | Formula (3) | 0.1 | 2.9 | 95 |
| Example 27 | Formula (3) | 1 | 3.6 | 96 |
| Example 28 | Formula (3) + Formula (4) | 0.5+0.5 | 3.8 | 96 |
| Example 29 | Formula (1) + Formula (3) | 0.3+0.5 | 3.7 | 95 |

As can be seen from Table 3, among the kinetics performance test results of the secondary batteries provided in Examples 20 to 29, the kinetic performance is as high as 2.6 C to 4 C, so that the secondary batteries provided in Examples 20 to 29 can quickly charge at a high rate, and at the same time, the secondary batteries have high or even very high energy density and excellent cycle performance (the capacity retention rate after the cycle performance test is as high as 94% to 96%).

In view of the foregoing, the secondary battery and the battery pack provided in the examples of the present disclosure are described in detail, and the principles and embodiments of the present disclosure are described by using specific examples herein. Descriptions of the above examples are merely intended to help understand the technical solutions and core ideas of the present disclosure. A person with ordinary skill in the art should understand that various modifications may still be made to the technical solutions described in the foregoing examples, or equivalents may be made to some of the technical features therein. These modifications or substitutions do not depart the essence of the corresponding technical solutions from the scope of the technical solutions of the examples of the present disclosure.

## Claims

1. A secondary battery, comprising a positive electrode plate, an electrolyte and a separator film, wherein the secondary battery further comprises:
a negative electrode plate, the negative electrode plate comprises a negative electrode current collector and a negative active material layer disposed on at least one surface of the negative electrode current collector, the negative active material layer comprises a negative active material, and the negative active material comprise graphite;
wherein a non-faradaic specific capacitance of the negative electrode plate is Cdl nF/g, 50≤Cdl≤250.

2. The secondary battery according to claim 1, wherein a resistance of the negative active material layer is R mQ, 4≤0.1×Cdl-R≤24.

3. The secondary battery according to any one of claims 1 to 2, wherein a value range of R is 1≤R≤15.

4. The secondary battery according to any one of claims 1 to 3, wherein a porosity P of the negative electrode plate ranges from 20% to 40%.

5. The secondary battery according to any one of claims 1 to 4, wherein a coating weight of the negative active material layer on one surface of the negative electrode current collector is CW mg/cm², 7≤CW≤12.

6. The secondary battery according to any one of claims 1 to 5, wherein a bulk density of the negative active material ranges from 1 g/cm³ to 2.5 g/cm³.

7. The secondary battery according to any one of claims 1 to 6, wherein a dispersion of particles in the negative active material ranges from 1.5 to 5.

8. The secondary battery according to any one of claims 1 to 7, wherein the electrolyte comprises a sulfur-containing additive comprising at least one of formulae (1) to (5):

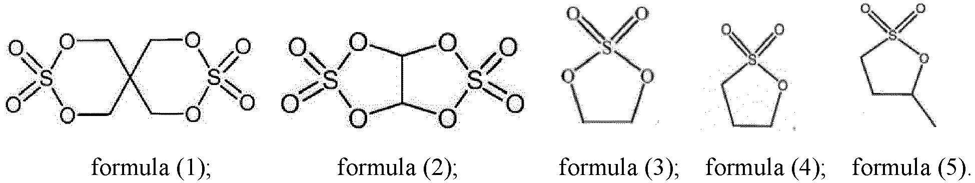

9. The secondary battery according to claim 8, wherein a content of the sulfur-containing additive is A% based on a mass of the electrolyte, 0.05≤Cdl×A%≤12.5.

10. The secondary battery according to any one of claims 8 to 9, wherein the content of the sulfur-containing additive is A% based on a mass of the electrolyte, 0.01≤A≤5.

11. A battery pack comprising the secondary battery according to any one of claims 1-10.
